# EUROPEAN PATENT SPECIFICATION

(11) **EP 1 927 787 B1**
(45) Date of publication and mention of the grant of the patent: **19.01.2011**
(21) Application number: 07254513.0
(22) Date of filing: 20.11.2007
(51) Int. Cl.: F16H 55/56, F16H 63/06, F16H 61/662

(54) **Belt-type continuously variable transmission and straddle-type vehicle equipped with the same**
Stufenloses Riemengetriebe und damit ausgerüstetes Grätschsitz-Fahrzeug
Transmission à variation continue à courroie et véhicule du type à selle équipé de celle-ci

(30) Priority: 29.11.2006 JP 2006322066
(43) Date of publication of application: 04.06.2008
(73) Proprietor: Yamaha Hatsudoki Kabushiki Kaisha, Shizuoka-ken Shizuoka 438-8501 (JP)
(72) Inventor: Ishida, Yousuke, Iwata-shi Shizuoka-ken 438-8501 (JP)
(74) Representative: Schoppe, Fritz

(56) References cited:
- DE-A1-102005 037 941
- GB-A- 2 354 805
- JP-A- 1 040 760
- JP-A- 2001 003 723
- US-A1- 2002 019 280
- US-A1- 2005 090 341
- US-A1- 2005 239 585

## Description

### BACKGROUND

The present invention relates to a belt-type continuously variable transmission and a straddle-type vehicle equipped with the same.

JP 64-40760 A discloses a belt-type continuously variable transmission according to the preamble of claim 1.

It is known in the art to provide a straddle-type vehicle equipped with a belt-type continuously variable transmission (hereinafter, referred to as a CVT) (see, for example, WO2003-085278 A1). The CVT includes a primary sheave to which a driving force from the engine is transmitted and a secondary sheave to which the driving force is transmitted from the primary sheave via a belt. At least one of the primary sheave and the secondary sheave is variable in belt winding diameter, so that the speed change ratio can be controlled by varying the ratio of the belt winding diameter of the primary sheave to that of the secondary sheave.

Fig. 7 is a sectional view of a conventional engine unit 112 described in WO2003-085278 A1. The engine unit 112 includes an engine 113, a belt-type continuously variable transmission (CVT) 114, a reduction mechanism 116, and a generator 129. The CVT 114 includes a primary sheave 136, a secondary sheave 137, and a belt 141.

The primary sheave 136 is unrotatably fixed to a crankshaft 120. The primary sheave 136 includes a fixed sheave member (hereinafter, referred to as a primary fixed sheave member) 136a and a moving sheave member (hereinafter, referred to as a primary moving sheave member) 136b. The primary moving sheave member 136b is opposed to the primary fixed sheave member 136a. The primary moving sheave member 136b and the primary fixed sheave member 136a constitute a substantially V-cross-section belt groove 136c around which the belt 141 is wound. The primary moving sheave member 136b can be moved to the primary fixed sheave member 136a along the axis of the crankshaft 120.

A cam plate 143 is disposed on the end of the primary moving sheave member 136b opposite to the primary fixed sheave member 136a so as to face the primary moving sheave member 136b. The cam plate 143 is tapered radially outward from the primary sheave 136 so as to come close to the primary moving sheave member 136b. Between the primary moving sheave member 136b and the cam plate 143 is provided a plurality of roller weights 144. The roller weights 144 can be displaced in the direction of the radius of the primary sheave 136 and is revolved around the crankshaft 120 with the rotation of the primary moving sheave member 136b and the cam plate 143.

The secondary sheave 137 is unrotatably mounted to a secondary sheave shaft 138. Like the primary sheave 136, the secondary sheave 137 includes a fixed sheave member (hereinafter, referred to as a secondary fixed sheave member) 137a and a moving sheave member (hereinafter, referred to as a secondary moving sheave member) 137b. The secondary moving sheave member 137b is opposed to the secondary fixed sheave member 137a. The secondary moving sheave member 137b and the secondary fixed sheave member 137a constitute a substantially V-cross-section belt groove 137c around which the belt 141 is wound. The secondary moving sheave member 137b can be moved to the secondary fixed sheave member 137a along the axis of the secondary sheave shaft 138.

A spring stopper 147 is disposed on the end of the secondary moving sheave member 137b opposite to the secondary fixed sheave member 137a. The spring stopper 147 is mounted to the secondary sheave shaft 138. The spring stopper 147 cannot be moved to the secondary fixed sheave member 137a along the axis of the secondary sheave shaft 138. Between the spring stopper 147 and the secondary moving sheave member 137b is disposed a compression coil spring 145. The compression coil spring 145 urges the secondary moving sheave member 137b in the direction in which the belt groove 137c decreases in width (the direction in which the distance between the secondary moving sheave member 137b and the secondary fixed sheave member 137a decreases).

When the rotation speed of the primary sheave 136 (the rotation speed of the engine 113) is low, the width of the belt groove 137c is held small by the urging force of the compression coil spring 145. Therefore, the winding diameter of the belt 141 on the secondary sheave 137 is relatively large. Thus, the belt 141 is drawn to the secondary sheave 137. Thus, the roller weights 144 are held close to the rotation axis so that the width of the belt groove 136c of the primary sheave 136 is held relatively large. This results in a high speed change ratio.

When the rotation speed of the primary sheave 136 increases, the centrifugal force generated at the roller weights 144 also increases. Therefore, the pressure of the roller weights 144 onto the primary moving sheave member 136b overcomes the urging force of the compression coil spring 145, so that the primary moving sheave member 136b is moved toward the primary fixed sheave member 136a. Along with that, the compression coil spring 145 is compressed to increase the width of the belt groove 137c of the secondary sheave 137. Thus, the belt winding diameter of the primary sheave 136 increases, while the belt winding diameter of the secondary sheave 137 decreases. Accordingly, the speed change ratio decreases as the rotation speed of the primary sheave 136, that is, the rotation speed of the engine 113 increases.

However, the conventional CVT has the problem of generating great vibration, particularly, while the engine runs at high rpm.

The present invention seeks to reduce the vibration of a CVT while the engine runs at high rpm.

This object is solved by a belt-type continuously variable transmission according to claim 1. The dependent claims concern particular embodiments of the invention of independent claim 1.

### BRIEF DESCRIPTION OF THE DRAWINGS

Embodiments of the invention are described, by way of example only, with respect to the accompanying drawings.
Fig. 1 is a side view of a motorcycle according to an embodiment of the invention.
Fig. 2 is a sectional view of an engine unit.
Fig. 3 is a perspective view of a secondary moving sheave member.
Fig. 4 is a schematic sectional view of the secondary sheave of a conventional engine unit described in WO2003-085278 A1 for illustrating the operation thereof, wherein Fig. 4(a) is a sectional view of the secondary sheave in an uncompressed state, and Fig. 4 (b) is a sectional view of the secondary sheave in a compressed state.
Fig. 5 is a schematic sectional view of the secondary sheave of a motorcycle according to an embodiment of the invention for illustrating the operation thereof, wherein Fig. 5(a) is a sectional view of the secondary sheave in an uncompressed state, and Fig. 5(b) is a sectional view of the secondary sheave in a compressed state.
Fig. 6 is a sectional view of the secondary sheave of a modification, wherein Fig. 6(a) is a sectional view of the secondary sheave in an uncompressed state, and Fig. 6(b) is a sectional view of the secondary sheave in a compressed state.
Fig. 7 is a sectional view of the conventional engine unit described in WO2003-085278 A1.

### DETAILED DESCRIPTION

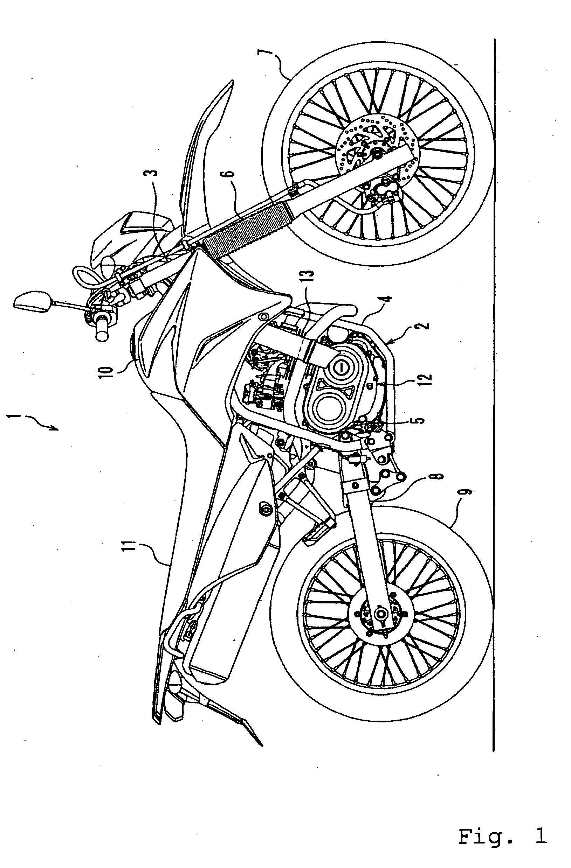

Example embodiments of the invention are described in detail with reference to the accompanying drawings in which Figs. 1 to 5 relate to an example of a motorcycle 1 according to the invention. The embodiment is described with reference to an off-road motorcycle 1 shown in Fig. 1 as an example of a straddle-type vehicle. However, the straddle-type vehicle according to the invention is not limited to that; it may be another type of motorcycle other than the off-road type (for example, a motorcycle type, a scooter type, or a so-called moped type). Also other embodiments can include straddle-type vehicles other than motorcycles, for example, all terrain vehicles (ATVs) and the like.

Fig. 1 is a side view of an embodiment of a motorcycle. Referring to Fig. 1, the schematic structure of the motorcycle 1 will be described. In the following description, the front, back, right, and left indicate directions viewed from the driver in a seat 11.

The motorcycle 1 has a body frame 2. The body frame 2 includes a head pipe 3, a down tube 4, and a seat pillar 5. The down tube 4 extends downward from the head pipe 3. The seat pillar 5 extends backward from the head pipe 3. The lower end of the head pipe 3 is connected to a front wheel 7 via a front fork 6 and so on. A rear arm 8 extending backward is supported at the lower end of the seat pillar 5. The rear end of the rear arm 8 is connected to a rear wheel 9. A cover 10 that covers the body frame 2 is disposed above the body frame 2. There is a seat 11 slightly to the rear of the center of the cover 10.

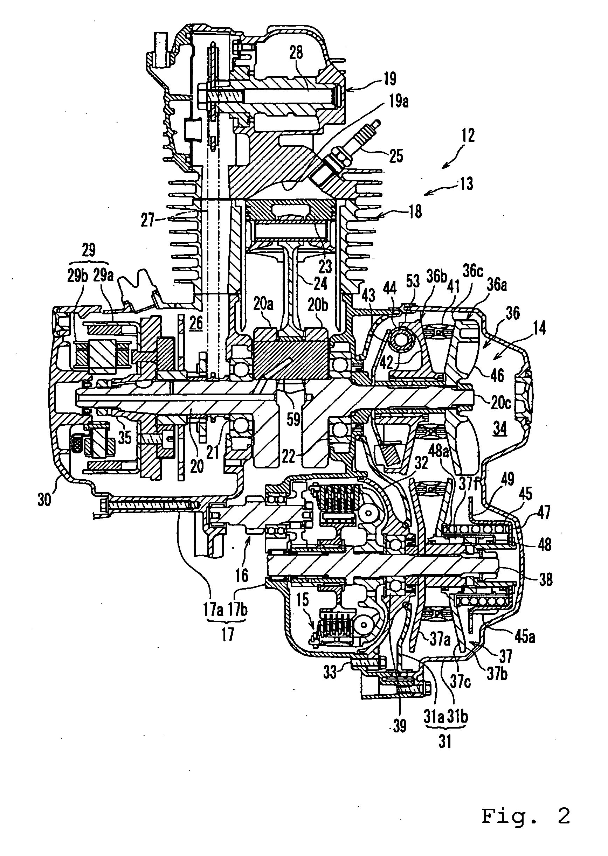

Between the down tube 4 and the seat pillar 5 is disposed an engine unit 12 supported by the down tube 4 and the seat pillar 5. As shown in Fig. 2, the engine unit 12 is a unit of, an engine 13, a belt-type continuously variable transmission (hereinafter, referred to as a CVT) 14 (see Fig. 2), a reduction mechanism 16, and other components. The driving force generated by the engine unit 12 is transmitted to the rear wheel 9 via power transmission means (not shown) such as a chain belt. Here, the engine 13 is a four-stroke single-cylinder engine. Alternatively, it may be a two-stroke engine or a multi-cylinder engine.

Referring to Fig. 2, the structure of the engine unit 12 will be described. The engine unit 12 includes the engine 13, the CVT 14, a centrifugal clutch 15, and the reduction mechanism 16. The structure of part of the reduction mechanism 16 is omitted in Fig. 2 for illustrative purposes.

The engine 13 includes a crankcase 17, a substantially cylindrical cylinder 18, and a cylinder head 19. The crankcase 17 comprises two case blocks of a first case block 17a on the left and a second case block 17b on the right. The first case block 17a and the second case block 17b abut on each other in the direction of the breadth of the vehicle. The cylinder 18 is connected obliquely to the front upper part of the crankcase 17 (also see Fig. 1). The cylinder head 19 is connected to one end of the cylinder 18.

The crankcase 17 accommodates a crankshaft 20 extending horizontally along the breadth of the vehicle. The crankshaft 20 is supported by the first case block 17a and the second case block 17b with bearings 21 and 22 therebetween.

The cylinder 18 accommodates a slidable piston 23. The end of the piston 23 adjacent to the crankshaft 20 is connected to one end of a connecting rod 24. The other end of the connecting rod 24 is connected to a crank pin 59 disposed between the left crank arm 20a and the right crank arm 20b of the crankshaft 20. Thus, the piston 23 reciprocates in the cylinder 18 with the rotation of the crankshaft 20.

The cylinder head 19 has a recess 19a communicating with the internal space of the cylinder 18 and an intake port and an exhaust port (not shown) communicating with the recess 19a. The cylinder head 19 accommodates an ignition plug 25 such that the igniter at the end is exposed to the recess 19a.

The cylinder 18 has at the left a cam chain chamber 26 that communicates the interior of the crankcase 17 with the interior of the cylinder head 19. The cam chain chamber 26 accommodates a timing chain 27. The timing chain 27 is wound around the crankshaft 20 and a cam shaft 28. Thus, the cam shaft 28 rotates with the rotation of the crankshaft 20 so that an inlet valve and an exhaust valve (not shown) are switched over.

A generator case 30 accommodating a generator 29 is mounted detachably on the left of the front half of the first case block 17a. Mounted on the right of the second case block 17b is a transmission case 31 accommodating the CVT 14.

The right side of the rear half of the second case block 17b has an opening. The opening is closed by a clutch cover 32. The clutch cover 32 is detachably attached to the second case block 17b with a bolt 33.

The transmission case 31 is separate from the crankcase 17. The transmission case 31 is composed of an inner case 31a that covers the inside (the left side) of the CVT 14 in the direction of the breadth of the vehicle and an outer case 31b that covers the outside (the right side) of the CVT 14 in the direction of the breadth of the vehicle. The inner case 31a is mounted on the right of the crankcase 17, while the outer case 31b is mounted on the right of the inner case 31a. The outer case 31b and the inner case 31a constitute a belt chamber 34.

The left end of the crankshaft 20 reaches the interior of the generator case 30 through the first case block 17a. The generator 29 is mounted to the left end of the crankshaft 20. Specifically, the generator 29 includes a stator 29a and a rotor 29b opposed to the stator 29a. The stator 29a is fixed to the generator case 30 so as not to be rotated and displaced. The rotor 29b is unrotatably fixed to a sleeve 35 that rotates with the crankshaft 20. Thus, the rotor 29b rotates with respect to the stator 29a with the rotation of the crankshaft 20 to generate power.

The belt chamber 34 accommodates the CVT 14. The CVT 14 includes a primary sheave 36 and a secondary sheave 37 located at the rear of the primary sheave 36. The crankshaft 20 passes through the second case block 17b and the inner case 31a into the belt chamber 34. The right part of the crankshaft 20 (strictly, the part on the right of the bearing 22) constitutes a primary sheave shaft 20c. The primary sheave 36 is supported by the primary sheave shaft 20c. Thus, the primary sheave 36 rotates with the rotation of the crankshaft 20.

The rear half of the transmission case 31 accommodates a secondary sheave shaft 38 passing through the inner case 31a and the clutch cover 32 into the crankcase 17. The secondary sheave shaft 38 is mounted to the clutch cover 32 with a bearing 39 therebetween. The secondary sheave 37 is supported by the secondary sheave shaft 38 in the belt chamber 34.

A V-belt (for example, a resin block V-belt) 41 is wound around the secondary sheave 37 and the primary sheave 36. Therefore, when the primary sheave 36 rotates with the crankshaft 20, its torque is transmitted to the secondary sheave 37 via the V-belt 41 to rotate the secondary sheave shaft 38 with the secondary sheave 37. The rotation of the secondary sheave shaft 38 is transmitted to the rear wheel 9 via the centrifugal clutch 15, the reduction mechanism 16, and the power transmission means such as a belt or a chain (not shown).

Referring to Fig. 2, the structure of the CVT 14 will be described in more detail. As described above, the CVT 14 includes the primary sheave 36, the secondary sheave 37, and the V-belt 41. The primary sheave 36 includes a tapered fixed sheave member 36a and a tapered moving sheave member 36b. The fixed sheave member 36a is fixed to the right end of the primary sheave shaft 20c in such a manner that it extends radially outward so as to come close to the outside (to the right) in the direction of the breadth of the vehicle, and is rotated with the primary sheave shaft 20c. The moving sheave member 36b is opposed to the fixed sheave member 36a at the position closer to the center (to the left) with respect to the fixed sheave member 36a, and extends radially outward so as to come close to the inside (to the left) in the direction of the breadth of the vehicle. The moving sheave member 36b is mounted to the primary sheave shaft 20c so as to be unrotatable but slidable in the axial direction. That is, the fixed sheave member 36a and the moving sheave member 36b constitute a V-cross-section belt groove 36c around which the V-belt 41 is wound. The width of the belt groove 36c can be varied by the displacement of the moving sheave member 36b relative to the fixed sheave member 36a.

A cooling fan 46 is provided on the outside (the right side in Fig. 2) of the fixed sheave member 36a. The left side surface of the moving sheave member 36b has a plurality of cam surfaces 42 extending radially. On the left of the moving sheave member 36b is provided a cam plate 43 facing the cam surfaces 42. Between the cam plate 43 and the cam surfaces 42 is provided a plurality of substantially cylindrical (or substantially columnar) roller weights (pressure members) 44 which cannot be displaced circumferentially and can be displaced radially). The cam surfaces 42 are tapered radially outward from the center so as to come close to the cam plate 43. The cam plate 43 is also tapered radially outward from the center to come close to the cam surfaces 42. That is, the width between the cam plate 43 and the cam surfaces 42 decreases radially outward.

The secondary sheave 37 includes a fixed sheave member 37a located inside in the direction of the breadth of the vehicle and a moving sheave member 37b located outside in the direction of the breadth of the vehicle and opposed to the fixed sheave member 37a. The fixed sheave member 37a is fixed to the secondary sheave shaft 38 in such a manner that it extends radially outward so as to come close to the inside (to the left) in the direction of the breadth of the vehicle, and is rotated with the secondary sheave shaft 38. The moving sheave member 37b is fixed to the secondary sheave shaft 38 in such a manner that it extends radially outward so as to come close to the outside (to the right) in the direction of the breadth of the vehicle. The moving sheave member 37b is mounted to the secondary sheave shaft 38 so as to be unrotatable but slidable in the axial direction. That is, the fixed sheave member 37a and the moving sheave member 37b constitute a V-cross-section belt groove 37c around which the V-belt 41 is wounded. The width of the belt groove 37c can be varied by the displacement of the moving sheave member 37b relative to the fixed sheave member 37a. The V-belt 41 has a trapezoidal cross section that decreases in width inward along the belt grooves 36c and 37c.

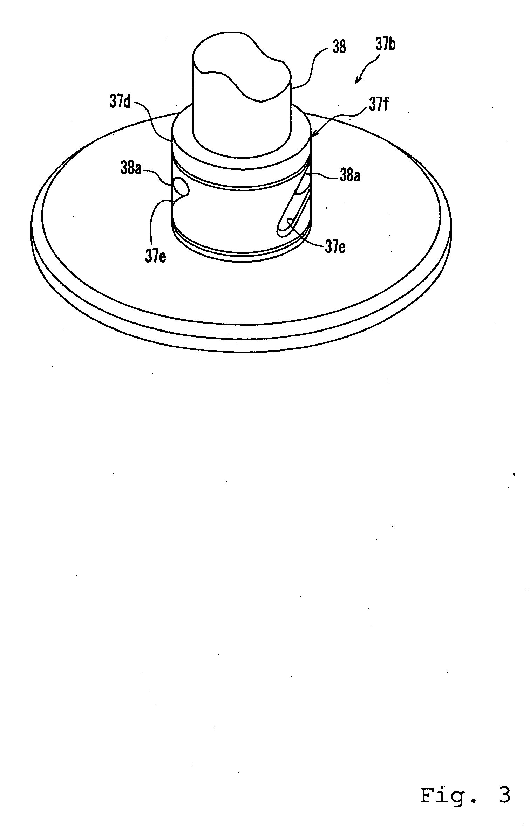

Fig. 3 is a perspective view of the secondary moving sheave member 37b. As shown in Fig. 3, the secondary moving sheave member 37b has a boss 37f. The boss 37f has an opening with an inside diameter substantially equal to the outside diameter of the secondary sheave shaft 38, in which the secondary sheave shaft 38 is fitted. The boss 37f has a plurality of engaging holes 37e at regular intervals on the circumference of the boss 37f. The engaging holes 37e extend at an angle with respect to the axis of the secondary sheave shaft 38 as viewed from the side. On the other hand, the secondary sheave shaft 38 has substantially circular-cross-section engaging protrusions 38a that engage with the engaging holes 37e. The secondary moving sheave member 37b is mounted to the secondary sheave shaft 38 by the engagement of the engaging protrusions 38a and the engaging holes 37e. Therefore, the secondary moving sheave member 37b is rotated about the secondary sheave shaft 38 with the axial movement of the secondary sheave shaft 38. As will be described later, a compression coil spring 45 is wound such that the direction of winding from the end adjacent to the secondary fixed sheave member 37a is the same as the direction of rotation of the secondary moving sheave member 37b which goes away from the secondary fixed sheave member 37a. Thus, what is called a torque cam mechanism is achieved.

As shown in Fig. 2, a substantially cylindrical inside spring guide 48 with an inside diameter substantially equal to the outside diameter of the boss 37f of the secondary moving sheave member 37b is fitted on the boss 37f. At the end (left end) of the inside spring guide 48 adjacent to the secondary moving sheave member 37b, a flange 48a that is in contact with the secondary moving sheave member 37b is provided.

Referring to Fig. 2, a spring stopper 47 is mounted at the right end of the secondary sheave shaft 38. The spring stopper 47 cannot be moved to the secondary fixed sheave member 37a along the axis of the secondary sheave shaft 38. Between the spring stopper 47 and the secondary moving sheave member 37b is disposed a compression coil spring 45 in a compressed state. The compression coil spring 45 accommodates the inside spring guide 48. The end of the compression coil spring 45 adjacent to the secondary moving sheave member 37b abuts on the flange 48a of the inside spring guide 48.

Thus, the secondary moving sheave member 37b is urged to the secondary fixed sheave member 37a together with the inside spring guide 48. The inside spring guide 48 is substantially fixed to the secondary movable sheave member 37b.

The end of the compression coil spring 45 adjacent to the spring stopper 47 is pressed against the spring stopper 47 by the urging force of the compression coil spring 45 and is unrotatable about the spring stopper 47. The end of the compression coil spring 45 adjacent to the secondary moving sheave member 37b is pressed against the inside spring guide 48 by the urging force of the compression coil spring 45 and is unrotatable about the inside spring guide 48. The inside spring guide 48 is unrotatable about the secondary moving sheave member 37b by the urging force of the compression coil spring 45 and the frictional force between the inside spring guide 48 and the secondary moving sheave member 37b.

The compression coil spring 45 is compressed and twisted by the displacement of the secondary moving sheave member 37b in the direction in which it goes away from the secondary fixed sheave member 37a. Specifically, the compression coil spring 45 is wound such that the direction of winding from the end adjacent to the secondary fixed sheave member 37a is the same as the direction of rotation of the secondary moving sheave member 37b when it goes away from the secondary fixed sheave member 37a. Thus, the compression coil spring 45 is compressed and twisted in the direction to increase in diameter as the secondary moving sheave member 37b separates from the secondary fixed sheave member 37a.

The spring stopper 47 is integrated with a substantially tubular (specifically, substantially cylindrical) outside spring guide 49 serving as a restricting member which encloses the compression coil spring 45. Specifically, the outside spring guide 49 has a tubular portion that encloses the compression coil spring 45 which continues to the spring stopper 47 and a flange at the end of the tubular portion adjacent to the secondary moving sheave member 37b. Thus, the embodiment has both the outside spring guide 49 disposed outside the compression coil spring 45 and the inside spring guide 48 disposed inside the compression coil spring 45. This allows the compression coil spring 45 to be guided, thus achieving smooth compression and decompression of the compression coil spring 45.

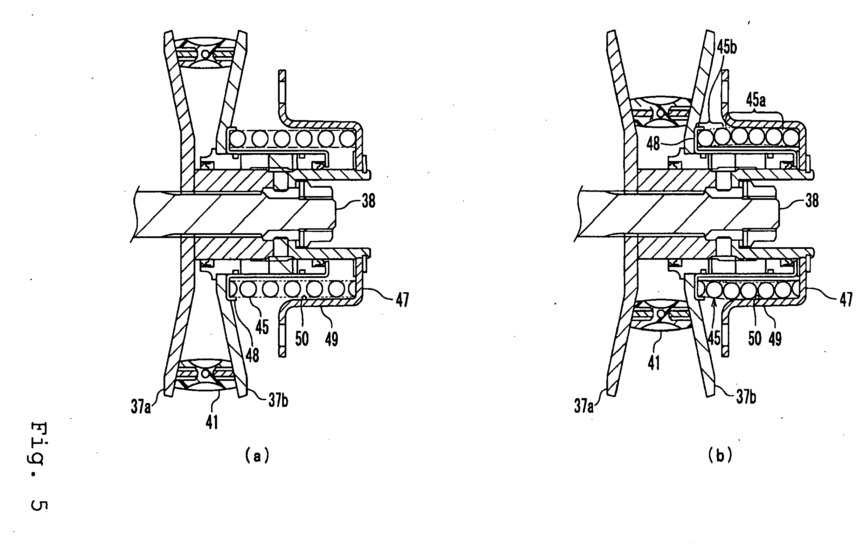

The outside spring guide 49 has a stopper surface 50. The stopper surface 50 is in contact with or opposed to at least part of the portion 45a (hereinafter, referred to as a main portion 45a) in the direction of compression except both ends of the compression coil spring 45. Specifically, the outside spring guide 49 is disposed such that the stopper surface 50 abuts on at least part of the main portion 45a of the compression coil spring 45 in the direction of compression when the compression coil spring 45 is compressed. Specifically speaking, the axial length of the outside spring guide 49 is set at one third or more (preferably, one half or more, and more preferably, two thirds or more that allows the outside spring guide 4.9 to reach the center of the compressed compression coil spring 45) of the length of the compression coil spring 45 in a compressed state (specifically, in the CVT 14, the length of the compression coil spring 45 in the most compressed state in the direction of compression (= along the axis of the secondary sheave shaft 38)). Moreover, the axial length of the outside spring guide 49 in the CVT 14 is set at a length such that one end 45b (see Fig. 5) of the compression coil spring 45 is not enclosed by the outside spring guide 49 when the compression coil spring 45 is in the most compressed state. That is, the axial length of the outside spring guide 49 is set at a length such that the entire portion of the compression coil spring 45 except the end 45b is enclosed by the outside spring guide 49 when the compression coil spring 45 is compressed the most in the CVT 14.

Here, "the portion 45a (the main portion 45a) of the compression coil spring 45 except both ends" indicates the portion of the compression coil spring 45 except the ends of about 5% (preferably, 10%) of the entire length in the direction of compression of the compression coil spring 45. Specifically, "the portion 45a (the main portion 45a) of the compression coil spring 45 except both ends" indicates the portion of the compression coil spring 45 except both ends of about two turns of the compression coil spring 45.

The inside diameter of the outside spring guide 49 is set so that the compression coil spring 45 abuts on the inner surface of the outside spring guide 49 when compressed (at least when the compression coil spring 45 is compressed the most in the CVT 14).

It is preferable that the outside spring guide 49 be made of a material with some strength or more so as to abut on the compression coil spring 45 when the compression coil spring 45 is compressed. Similarly, it is preferable that the inside spring guide 48 be made of a material with some strength or more. For example, each of the outside spring guide 49 and the inside spring guide 48 may be made of metal such as iron, stainless steel, or aluminum. The inner surface of the metallic outside spring guide 49 may be coated with an elastic member such as rubber or resin in order to prevent the interference between the metals. Similarly, the outer surface of the metallic inside spring guide 48 may be coated with an elastic member such as rubber or resin.

The action of the CVT 14 and the operation and advantages of this embodiment will be described. The speed change ratio of the CVT 14 depends on the ratio of the pressure of the roller weights 44 that presses the primary moving sheave member 36b toward the primary fixed sheave member 36a to the force of the compression coil spring 45 that urges the secondary moving sheave member 37b toward the secondary fixed sheave member 37a.

More specifically, when the rotation speed of the engine 13 (specifically, the rotation speed of the crankshaft 20 = the rotation speed of the primary sheave shaft 20c) is low, the roller weights 44 are not subjected to large centrifugal force. Therefore, the secondary moving sheave member 37b is pressed to the secondary fixed sheave member 37a by the urging force of the compression coil spring 45, so that the belt groove 37c of the secondary sheave 37 is held narrow in width. Thus, the belt winding diameter of the secondary sheave 37 is held relatively large (see the state of the secondary sheave 37 shown above the secondary sheave shaft 38 in Fig. 2 (in the position of the maximum speed change ratio)). In this state, the V-belt 41 presses the primary moving sheave member 36b to the primary fixed sheave member 36a because the V-belt 41 is drawn to the secondary sheave 37). This increases the width of the belt groove 36c of the primary sheave 36, thus relatively decreasing the belt winding diameter of the primary sheave 36 (see the state of the primary sheave 36 shown below the primary sheave shaft 20c in Fig. 2 (in the position of the maximum speed change ratio)). As a result, the speed change ratio is increased.

On the other hand, when the rotation speed of the primary sheave shaft 20c increases, the roller weights 44 move radially outward by the centrifugal force. Here, the distance between the primary moving sheave member 36b and the cam plate 43 decreases radially outward. Therefore, the primary moving sheave member 36b is pressed toward the primary fixed sheave member 36a (rightward) as the roller weights 44 move radially outward. Then, the primary moving sheave member 36b slides to the primary fixed sheave member 36a to narrow the belt groove 36c (see the state of the primary sheave 36 shown above the primary sheave shaft 20c in Fig. 2(in the position of the minimum speed change ratio)). This increases the belt winding diameter of the primary sheave 36. Thus, the V-belt 41 is drawn to the primary sheave 36, and presses the secondary moving sheave member 37b in the direction away from the secondary fixed sheave member 37a (rightward) against the urging force of the compression coil spring 45. Thus, the secondary moving sheave member 37b slides in the direction away from the secondary fixed sheave member 37a to decreases the belt winding diameter of the secondary sheave 37 (see the state of the secondary sheave 37 shown below the secondary sheave shaft 38 in Fig. 2 (in the position of the minimum speed change ratio)). As a result, the speed change ratio is decreased.

As described above, as shown in Fig. 3, the secondary moving sheave member 37b and the secondary sheave shaft 38 are coupled by the engagement of the engaging protrusions 38a and the engaging holes 37e. Therefore, when the secondary moving sheave member 37b slides in the direction away from the secondary fixed sheave member 37a, the secondary moving sheave member 37b slides along the axis of the secondary sheave shaft 38 while rotating around the secondary sheave shaft 38. Here, the end of the compression coil spring 45 adjacent to the spring stopper 47 cannot rotate with respect to the spring stopper 47 by the urging force of the compression coil spring 45. The end of the compression coil spring 45 adjacent to the secondary moving sheave member 37b cannot rotate with respect to the inside spring guide 48 by the urging force of the compression coil spring 45. The inside spring guide 48 cannot rotate with respect to the secondary moving sheave member 37b by the urging force of the compression coil spring 45. Thus, since the secondary moving sheave member 37b slides while rotating along the axis of the secondary sheave shaft 38, the compression coil spring 45 is twisted. Specifically, when the secondary moving sheave member 37b slides in the direction away from the secondary fixed sheave member 37a, the compression coil spring 45 is twisted in the direction of increasing in diameter. For example, when the compression coil spring 45 is compressed the most, the main portion 45a of the compression coil spring 45 expands to about 1.4 times that in an uncompressed state.

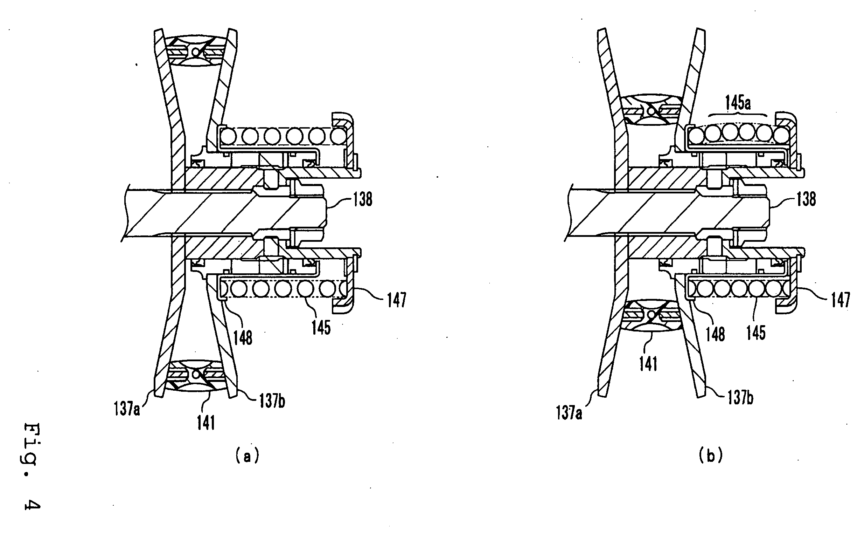

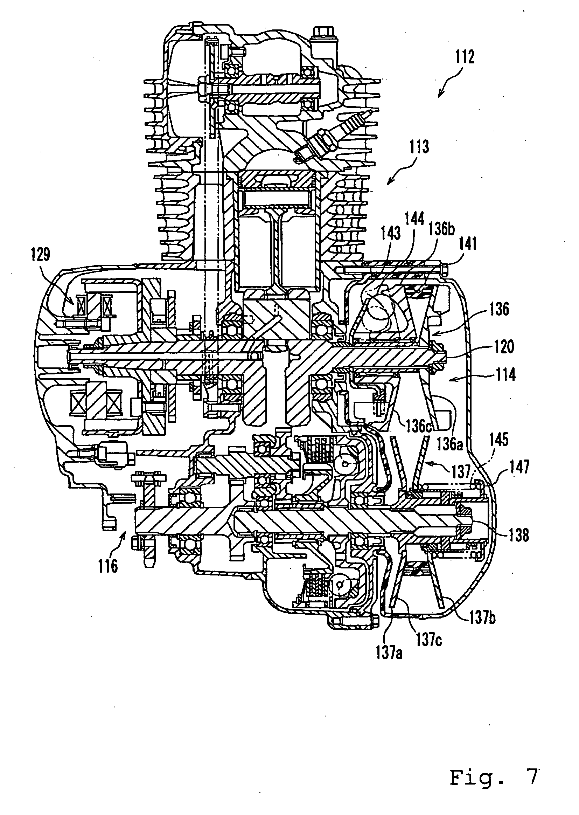

For example, with the conventional CVT 114 shown in Figs. 4 and 7 without the outside spring guide 49 serving as a restricting member, the compression coil spring 145 (particularly, the main portion 145a) is buckled (off-centered) when compressed because the outward deformation of the compression coil spring 145 is not restricted. Thus, the centrifugal force applied to the compression coil spring 145 with the rotation of the secondary sheave 137 causes the compression coil spring 145 to vibrate. Accordingly, the compression coil spring 145 interferes with the neighboring components such as an inside spring guide 148. This causes various problems of generating noises, damaging components neighboring the compression coil spring 145 such as the inside spring guide 148, and decreasing the stability of the performance of the CVT 114. The inventor has found the vibration and the buckling of the pressure coil spring for the first time, and come to the provision of the outside spring guide 49 serving as a restricting member for restricting buckling when the compression coil spring is decompressed or compressed, as shown in Figs. 2 and 5.

As shown in Figs. 2 and 5, the outside spring guide 49 serving as a restricting member for restricting buckling when the compression coil spring 45 is compressed prevents the vibration of the compression coil spring 45, thus reducing noises caused by the vibration of the compression coil spring 45 and damages on neighboring components such as the inside spring guide 48 and improving the stability of the performance of the CVT 14.

More specifically, in this embodiment, the substantially tubular (specifically, substantially cylindrical) outside spring guide 49 is disposed so as to enclose the compression coil.spring 45. The inside diameter of the outside spring guide 49 is set so that the stopper surface 50 abuts on at least part of the main portion 45a in the direction of compression when the compression coil spring 45 is compressed. Accordingly, the outside spring guide 49 prevents the compression coil spring 45 from increasing in diameter during compression. That is, the compression coil spring 45 can increase in diameter only to the portion along the inner circumference of the outside spring guide 49. This effectively prevents the buckling of the compression coil spring 45 during compression. This reduces noises caused by the vibration of the compression coil spring 45 and damages on neighboring components such as the inside spring guide 48 and improves the stability of the performance of the CVT 14.

Even if the buckling of the compression coil spring 45 during compression cannot be prevented completely, the vibration of the compression coil spring 45 can be prevented by the interaction of the force of the compression coil spring 45 to increase in diameter when compressed and the reaction force applied from the outside spring guide 49 against it, provided that part of the compression coil spring 45 during compression is in contact with the outside spring guide 49. That is, the effect of reducing the vibration of the compression coil spring 45 is always provided as long as the outside spring guide 49 is in contact with at least part of the compression coil spring 45 in the direction of compression during compression.

The outside spring guide 49 may be in contact with at least part of the circumference of the compression coil spring 45 during compression. In view of preventing the buckling of the compressed compression coil spring 45 to eliminate the cause of the vibration of the compression coil spring 45 by restricting the buckling of the compression coil spring 45 during compression, it is preferable that the outside spring guide 49 be in contact with the entire circumference of the compressed compression coil spring 45 as in this embodiment. This prevents the compression coil spring 45 from vibrating more effectively.

Furthermore, it is preferable that the central axis of the outside spring guide 49 agree with the central axis of the compression coil spring 45 and that the inner wall of the outside spring guide 49 be point-symmetrical with the central axis in the cross section perpendicular to the central axis (for example, circular or regular polygonal). This prevents the buckling of the compression coil spring 45 during compression effectively, thereby eliminating the cause of the vibration of the compression coil spring 45 effectively.

In view of preventing the vibration of the compression coil spring 45 during compression, it is preferable that the outside spring guide 49 during compression be in contact with at least part of the main portion 45a in the direction of compression. Furthermore, it is preferable that the outside spring guide 49 during compression be in contact with at least part of the central portion of the compression coil spring 45 in the direction of compression (the part about one third of the length of the compression coil spring 45 about the central portion in the compressing direction). This is because the main portion 45a (particularly, the central portion) of the compression coil spring 45 is particularly greatly off-centered during compression to act as the source of vibration, and therefore holding at least part of the main portion 45a (particularly, the central portion) in the direction of compression prevents the vibration of the compression coil spring 45 more effectively.

Specifically, it is preferable that the axial length of the outside spring guide 49 be set at one third or more of the length of the compression coil spring 45 in a compressed state (preferably, one half or more, and more preferably, two thirds or more that allows the outside spring guide 49 to reach the center of the compressed compression coil spring 45).

In this case, it is preferable that the axial length of the outside spring guide 49 be not set at a length so as to enclose the entire compression coil spring 45 in a compressed state. This is because if the entire compression coil spring 45 in a compressed state is enclosed by the outside spring guide 49 and thus in contact with the outside spring guide 49, an extremely great reaction force is applied to the outside spring guide 49 when the compression coil spring 45 is compressed. That is, it is preferable that the axial length of the outside spring guide 49 be set at a length such that one end 45b of the compression coil spring 45 is not enclosed by the outside spring guide 49 in the CVT 14 when the compression coil spring 45 is in the most compressed state. For example, it is preferable that the axial length of the outside spring guide 49 be set at a length such that the portion of the compression coil spring 45 except the end 45b is enclosed by outside spring guide 49 when the compression coil spring 45 is in a most compressed state in the CVT 14.

It is preferable that the entire main portion 45a of the compression coil spring 45 be in contact with the outside spring guide 49. However, sufficient effect of preventing the vibration of the compression coil spring 45 can be given provided that part (for example, one to several turns) of the main portion 45a of the compression coil spring 45 during compression abuts on the outside spring guide 49.

Another method for preventing damage on the inside spring guide 48 due to the vibration of the compression coil spring 45 is to dispose the compression coil spring 45 sufficiently apart from the inside spring guide 48. In other words, the inside diameter of the compression coil spring 45 may be set sufficiently larger than the outside diameter of the inside spring guide 48. This structure prevents the interference between the compression coil spring 45 and the inside spring guide 48 even if the compression coil spring 45 vibrates. However, this increases the outside diameter of the compression coil spring 45, resulting in increasing the size of the CVT 14 and decreasing the stability of the performance of the CVT 14.

In contrast, the method of the embodiment in which the outside spring guide 49 is provided as a restricting member does not increase the size of the secondary sheave 37 so much, thus achieving a compact CVT 14.

The outside spring guide 49 may be separate from the components of the CVT 14 and the centrifugal clutch 15. However, it is particularly preferable that the outside spring guide 49 be integrated with the components of the CVT 14 and the centrifugal clutch 15. This is because this structure decreases the number of the components of the CVT 14 to facilitate assembly of the CVT 14 and reduce the manufacturing cost. Specifically, the outside spring guide 49 of this embodiment is integrated with the conventional spring stopper (fixing member) 47, achieving high manufacturing easiness and low cost.

In this embodiment, the outside spring guide 49 is integrated with the spring stopper 47. Instead, the outside spring guide 49 may be integrated with another neighboring component such as a component of the centrifugal clutch 15. The inside spring guide 48 may be fixed to another neighboring component such as a component of the centrifugal clutch 15. A modification in which the outside spring guide 49 is fixed to the inside spring guide 48 will be described by way of example.

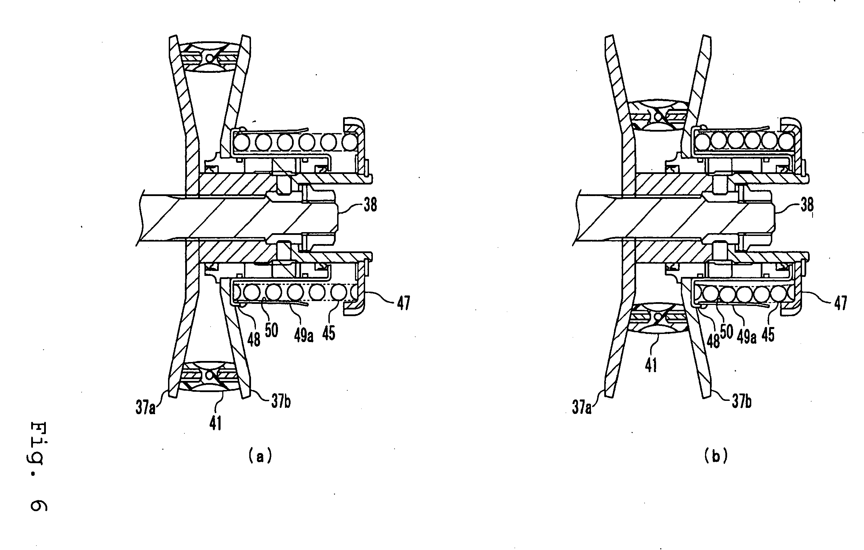

Fig. 6 illustrates a secondary sheave of the modification in cross section. As shown in Fig. 6, a cylindrical outside spring guide 49a of this modification is mounted to the secondary moving sheave member 37b so as not to be displaced. Specifically, the inside spring guide 48 cannot be displaced with respect to the secondary moving sheave member 37b by the urging force of the compression coil spring 45. The outside spring guide 49a is mounted to the inside spring guide 48.

This structure also prevents the vibration of the compression coil spring 45 during compression as in the foregoing embodiment.

The foregoing embodiment and modification employ the structure in which the secondary moving sheave member is urged toward the secondary fixed sheave member using the compression coil spring. However, the invention is not limited to the structure; for example, the secondary moving sheave member may be urged by a helical tension spring.

Although the restricting member has been described using the substantially tubular outside spring guide 49 as an example, the restricting member of the invention is not limited to that. Specifically, the outside spring guide may be in contact with the coil spring during decompression or compression at different positions of the circumference of the main portion except both ends of the coil spring. Thus, the inner shape of the outside spring guide may be substantially polygonal or elliptical in cross section. The outside spring guide may be substantially tubular at least whose part of the circumference is cut off in the axial direction (for example, substantially C-shape in cross section). Furthermore, the outside spring guide may be composed of a plurality of members arranged around the outer circumference of the coil spring. Those structures can effectively prevent the coil spring from being deformed to buckle, as in the embodiment and the modification.

The invention is particularly effective in the belt-type continuously variable transmission that employs a torque cam mechanism, described in the foregoing embodiment and the modification, although it can also be applied to a belt-type continuously variable transmission that does not employ the torque cam mechanism.

The invention finds application to a straddle-type vehicle equipped with a belt-type continuously variable transmission.

### DESCRIPTION OF REFERENCE NUMERALS AND SIGNS

1: motorcycle
12: engine unit
13: engine
14: belt-type continuously variable transmission (CVT)
15: centrifugal clutch
16: reduction mechanism
20: crankshaft
20c: primary sheave shaft
36: primary sheave
36a: primary fixed sheave member
36b: primary moving sheave member
36c: belt groove
37: secondary sheave
37a: secondary fixed sheave member
37b: secondary moving sheave member
37c: belt groove
37e: engaging hole
38: secondary sheave shaft
38a: engaging protrusion
41: V-belt
45: compression coil spring
48: inside spring guide
49: outside spring guide

## Claims

1. A belt-type continuously variable transmission (14) including a primary sheave (36), a secondary sheave (37), and a belt (41) wound around the primary sheave (36) and the secondary sheave (37), wherein
the secondary sheave (37) comprises:
a first sheave member (37a);
a second sheave member (37b) opposed to the first sheave member (37a) in such a manner as to be displaced along the axis of the first sheave member (37a) and constituting a belt groove (37c) around which the belt (41) is wound with the first sheave member (37a);
a compression coil spring (45) urging the second sheave member (37b) toward the first sheave member (37a), the compression coil spring having a first end, a second end (45b) and a central portion (45a) positioned between the first and second ends in the direction of compression; and
a restricting member (49, 49a) restricting buckling of the compression coil spring (45) during decompression or compression;
wherein the restricting member is an outside spring guide (49, 49a) disposed outside the compression coil spring (45) so as to enclose the first end of the compression coil spring when the compression coil spring is compressed; and
wherein the second sheave member (37b) is disposed so as to be rotated while being displaced in the direction away from the first sheave member (37a), and the compression coil spring (45) is wound from an end of the second sheave member (37b) in such a manner that the winding direction is the same as the direction of rotation when the second sheave member (37b) is displaced in the direction away from the first sheave member (37a) whereby the compression coil spring (45) is twisted when compressed when the second sheave member (37b) is displaced in the direction away from the first sheave member (37a);
**characterized in that**:
the axial length of the outside spring guide (49, 49a) is one half or more of the length of the compression coil spring (45) when the compression coil spring is compressed;
the outside spring guide (49, 49a) is disposed so as to be in contact with at least part of the central portion (45a) of the compression coil spring (45) when the compression coil spring is compressed; and
the axial length of the outside spring guide (49, 49a) is set such that the second end (45b) of the compression coil spring (45) is not enclosed by the outside spring guide (49, 49a) when the compression coil spring is in the most compressed state.

2. The belt-type continuously variable transmission according to Claim 1, wherein the outside spring guide (49, 49a) is disposed so as to abut on part of the circumference of the central portion (45a) of the compression coil spring (45) when the compression coil spring is compressed.

3. The belt-type continuously variable transmission according to Claim 1, wherein the outside spring guide (49, 49a) is disposed so as to abut on the entire circumference of the central portion (45a) of the compression coil spring (45) when the compression coil spring is compressed.

4. The belt-type continuously variable transmission according to any preceding claim, wherein the outside spring guide (49, 49a) is substantially tubular.

5. The belt-type continuously variable transmission according to Claim 4, wherein at least part of the circumference of the outside spring guide (49, 49a) is cut off along the axis of the outside spring guide.

6. The belt-type continuously variable transmission according to Claim 4 or 5, wherein the outside spring guide (49, 49a) is disposed such that the central axis agrees with the central axis of the compression coil spring (45).

7. The belt-type continuously variable transmission according to any preceding claim, wherein the secondary sheave (37) further comprises a spring stopper (47) that is disposed in contact with the end of the compression coil spring (45) opposite to the second sheave member (37b) so as not to be displaced to the first sheave member (37a) along the axis of the secondary sheave, and the outside spring guide (49) is integrated with the spring stopper (47).

8. The belt-type continuously variable transmission according to any of Claims 1 to 6, wherein the outside spring guide (49a) is mounted to the second sheave member (37b) so as not to be displaced.

9. The belt-type continuously variable transmission according to any preceding claim, wherein
the primary sheave (36) comprises:
another first sheave member (36a) rotating around the axis of rotation;
another second sheave member (36b) opposed to the another first sheave member (36a) so as to be displaced along the axis of the another first sheave member and constituting a belt groove (36c) around which the belt (41) is wound with the another first sheave member; and
a pressure member (44) pivoting around the axis of rotation with the rotation of the another second sheave member (36b) and moving outward in the direction of the radius of the second sheave member while pressing the another second sheave member toward the another first sheave member (36a) by the centrifugal force generated by the pivot to thereby decrease the width of the belt groove (36c) between the another second sheave member and the another first sheave member.

10. A straddle-type vehicle (1) comprising the belt-type continuously variable transmission (14) according to any preceding claim.

## Patentansprüche

1. Ein riemenartiges stufenloses Getriebe (14) mit einer Primärscheibe (36), einer Sekundärscheibe (37) und einem Riemen (41), der um die Primärscheibe (36) und die Sekundärscheibe (37) gewickelt ist, wobei
die Sekundärscheibe (37) folgende Merkmale aufweist:
ein erstes Scheibenbauteil (37a);
ein zweites Scheibenbauteil (37b), das dem ersten Scheibenbauteil (37a) in einer derartigen Weise gegenüberliegt, um entlang der Achse des ersten Scheibenbauteils (37a) verschoben zu werden, und das mit dem ersten Scheibenbauteil (37a) eine Riemenrille (37c), um die der Riemen (41) gewickelt ist, bildet;
eine Druck-Schraubenfeder (45), die das zweite Scheibenbauteil (37b) in Richtung des ersten Scheibenbauteils (37a) treibt, wobei die Druck-Schraubenfeder ein erstes Ende, ein zweites Ende (45b) und einen Mittelabschnitt (45a), der in der Druckrichtung zwischen dem ersten und dem zweiten Ende positioniert ist, aufweist; und
ein Begrenzungsbauteil (49, 49a), das ein Ausbeulen der Druck-Schraubenfeder (45) während Druckentlastung oder Druck begrenzt;
wobei das Begrenzungsbauteil eine äußere Federführung (49, 49a) ist, die außerhalb der Druck-Schraubenfeder (45) angeordnet ist, um so das erste Ende der Druck-Schraubenfeder zu umschließen, wenn die Druck-Schraubenfeder zusammengedrückt wird; und
wobei das zweite Scheibenbauteil (37b) so angeordnet ist, um gedreht zu werden, während es in der Richtung weg von dem ersten Scheibenbauteil (37a) verschoben wird, und die Druck-Schraubenfeder (45) von einem Ende des zweiten Scheibenbauteils (37b) in einer derartigen Weise gewickelt ist, dass die Wicklungsrichtung gleich der Drehrichtung ist, wenn das zweite Scheibenbauteil (37b) in der Richtung weg von dem ersten Scheibenbauteil (37a) verschoben wird, wodurch die Druck-Schraubenfeder (45) verdreht wird, wenn sie zusammengedrückt wird, wenn das zweite Scheibenbauteil (37b) in der Richtung weg von dem ersten Scheibenbauteil (37a) verschoben wird;
**dadurch gekennzeichnet, dass**:
die Axiallänge der äußeren Federführung (49, 49a) eine Hälfte oder mehr der Länge der Druck-Schraubenfeder (45) ist, wenn die Druck-Schraubenfeder zusammengedrückt wird;
die äußere Federführung (49, 49a) so angeordnet ist, um in Kontakt mit zumindest einem Teil des Mittelabschnitts (45a) der Druck-Schraubenfeder (45) zu sein, wenn die Druck-Schraubenfeder zusammengedrückt wird; und
die Axiallänge der äußeren Federführung (49, 49a) derart eingestellt ist, dass das zweite Ende (45b) der Druck-Schraubenfeder (45) nicht durch die äußere Federführung (49, 49a) umschlossen ist, wenn die Druck-Schraubenfeder sich in dem am stärksten zusammengedrückten Zustand befindet.

2. Das riemenartige stufenlose Getriebe gemäß Anspruch 1, bei dem die äußere Federführung (49, 49a) so angeordnet ist, um an einen Teil des Umfangs des Mittelabschnitts (45a) der Druck-Schraubenfeder (45) anzustoßen, wenn die Druck-Schraubenfeder zusammengedrückt wird.

3. Das riemenartige stufenlose Getriebe gemäß Anspruch 1, bei dem die äußere Federführung (49, 49a) so angeordnet ist, um an den gesamten Umfang des Mittelabschnitts (45a) der Druck-Schraubenfeder (45) anzustoßen, wenn die Druck-Schraubenfeder zusammengedrückt wird.

4. Das riemenartige stufenlose Getriebe gemäß einem der vorherigen Ansprüche, bei dem die äußere Federführung (49, 49a) im Wesentlichen rohrförmig ist.

5. Das riemenartige stufenlose Getriebe gemäß Anspruch 4, bei dem zumindest ein Teil des Umfangs der äußeren Federführung (49, 49a) entlang der Achse der äußeren Federführung abgeschnitten ist.

6. Das riemenartige stufenlose Getriebe gemäß Anspruch 4 oder 5, bei dem die äußere Federführung (49, 49a) derart angeordnet ist, dass die Mittelachse mit der Mittelachse der Druck-Schraubenfeder (45) übereinstimmt.

7. Das riemenartige stufenlose Getriebe gemäß einem der vorherigen Ansprüche, bei dem die Sekundärscheibe (37) ferner einen Federanschlag (47) aufweist, der in Kontakt mit dem Ende der Druck-Schraubenfeder (45), das dem zweiten Scheibenbauteil (37b) gegenüberliegt, angeordnet ist, um so nicht entlang der Achse der Sekundärscheibe zu dem ersten Scheibenbauteil (37a) verschoben zu werden, und die äußere Federführung (49) in den Federanschlag (47) integriert ist.

8. Das riemenartige stufenlose Getriebe gemäß einem der Ansprüche 1 bis 6, bei dem die äußere Federführung (49a) an dem zweiten Scheibenbauteil (37b) befestigt ist, um nicht verschoben zu werden.

9. Das riemenartige stufenlose Getriebe gemäß einem der vorherigen Ansprüche, bei dem
die Primärscheibe (36) folgende Merkmale aufweist:
ein weiteres erstes Scheibenbauteil (36a), das sich um die Rotationsachse dreht;
ein weiteres zweites Scheibenbauteil (36b), das dem weiteren ersten Scheibenbauteil (36a) gegenüberliegt, um so entlang der Achse des weiteren ersten Scheibenbauteils verschoben zu werden, und das mit dem weiteren ersten Scheibenbauteil eine Riemenrille (36c), um die der Riemen (41) gewickelt ist, bildet; und
ein Druckbauteil (44), das sich mit der Drehung des weiteren zweiten Scheibenbauteils (36b) um die Rotationsachse schwenkt, und das sich durch die Zentrifugalkraft, die durch das Schwenken erzeugt wird, in der Richtung des Radius des zweiten Scheibenbauteils nach außen bewegt, während das weitere zweite Scheibenbauteil in Richtung des weiteren ersten Scheibenbauteils (36a) gedrückt wird, um **dadurch** die Breite der Riemenrille (36c) zwischen dem weiteren zweiten Scheibenbauteil und dem weiteren ersten Scheibenbauteil zu vermindern.

10. Ein Grätsch-Typ-Fahrzeug (1) mit dem riemenartigen stufenlosen Getriebe (14) gemäß einem der vorherigen Ansprüche.

## Revendications

1. Transmission à variation continue à courroie (14) comportant une poulie primaire (36), une poulie secondaire (37), et une courroie (41) enroulée autour de la poulie primaire (36) et de la poulie secondaire (37), dans laquelle
la poulie secondaire (37) comprend:
un premier élément de poulie (37a);
un deuxième élément de poulie (37b) opposé au premier élément de poulie (37a) de manière à être déplacé le long de l'axe du premier élément de poulie (37a) et constituant une rainure à courroie (37c) autour de laquelle la courroie (41) est enroulée avec le premier élément de poulie (37a);
un ressort hélicoïdal de compression (45) poussant le deuxième élément de poulie (37b) vers le premier élément de poulie (37a), le ressort hélicoïdal de compression présentant une première extrémité, une deuxième extrémité (45b) et une partie centrale (45a) positionnée entre les première et deuxième extrémités dans la direction de compression; et
un élément de limitation (49, 49a) limitant le bouclage du ressort hélicoïdal de compression (45) pendant la décompression ou la compression;
dans laquelle l'élément de limitation est un guide-ressort extérieur (49, 49a) disposé à l'extérieur du ressort hélicoïdal de compression (45) de manière à enserrer la première extrémité du ressort hélicoïdal de compression lorsque le ressort hélicoïdal de compression est comprimé; et
dans laquelle le deuxième élément de poulie (37b) est disposé de manière à tourner tandis qu'il est déplacé en s'éloignant du premier élément de poulie (37a), et le ressort hélicoïdal de compression (45) est enroulé à partir d'une extrémité du deuxième élément de poulie (37b) de sorte que la direction d'enroulement soit la même que la direction de rotation lorsque le deuxième élément de poulie (37b) est déplacé en s'éloignant du premier élément de poulie (37a), le ressort hélicoïdal de compression (45) étant ainsi torsionné quand il est comprimé lorsque le deuxième élément de poulie (37b) est déplacé en s'éloignant du premier élément de poulie (37a);
**caractérisé par le fait que**:
la longueur axiale du guide-ressort extérieur (49, 49a) est la moitié ou plus de la longueur du ressort hélicoïdal de compression (45) lorsque le ressort hélicoïdal de compression est comprimé.
le guide-ressort extérieur (49, 49a) est disposé de manière à être en contact avec au moins une partie de la partie centrale (45a) du ressort hélicoïdal de compression (45) lorsque le ressort hélicoïdal de compression est comprimé; et
la longueur axiale du guide-ressort extérieur (49, 49a) est réglée de sorte que la deuxième extrémité (45b) du ressort hélicoïdal de compression (45) ne soit pas enserré par le guide-ressort (49, 49a) à l'état le plus comprimé.

2. Transmission à variation continue à courroie selon la revendication 1, dans laquelle le guide-ressort extérieur (49, 49a) est disposé de manière à venir en aboutement sur une partie de la circonférence de la partie central (45a) du ressort hélicoïdal de compression (45) lorsque le ressort hélicoïdal de compression est comprimé.

3. Transmission à variation continue à courroie selon la revendication 1, dans laquelle le guide-ressort extérieur (49, 49a) est disposé de manière à venir en aboutement sur toute la circonférence de la partie centrale (45a) du ressort hélicoïdal de compression (45) lorsque le ressort hélicoïdal de compression est comprimé.

4. Transmission à variation continue à courroie selon l'une ou l'autre revendication précédente, dans laquelle le guide-ressort extérieur (49, 49a) est sensiblement tubulaire.

5. Transmission à variation continue à courroie selon la revendication 4, dans laquelle au moins une partie de la circonférence du guide-ressort extérieur (49, 49a) est découpée le long de l'axe du guide-ressort extérieur.

6. Transmission à variation continue à courroie selon la revendication 4 ou 5, dans laquelle le guide-ressort extérieur (49, 49a) est disposé de sorte que l'axe central coïncide avec l'axe central du ressort hélicoïdal de compression (45).

7. Transmission à variation continue à courroie selon l'une ou l'autre revendication précédente, dans laquelle la poulie secondaire (37) comprend par ailleurs un arrêteur de ressort (47) qui est disposé en contact avec l'extrémité du ressort hélicoïdal de compression (45) opposé au deuxième élément de poulie (37b) de manière à ne pas être déplacé vers le premier élément de poulie (37a) le long de l'axe de la poulie secondaire, et le guide-ressort extérieur (49) est intégré avec l'arrêteur de ressort (47).

8. Transmission à variation continue à courroie selon l'une quelconque des revendications 1 à 6, dans laquelle le guide-ressort extérieur (49a) est monté sur le deuxième élément de poulie (37b), de manière à ne pas être déplacé.

9. Transmission à variation continue à courroie selon l'une ou l'autre revendication précédente, dans laquelle
la poulie primaire (36) comprend:
un autre premier élément de poulie (36a) tournant autour de l'axe de rotation;
un autre deuxième élément de poulie (36b) opposé à l'autre premier élément de poulie (36a) de manière à être déplacé le long de l'axe de l'autre premier élément de poulie et constituant une rainure à courroie (36c) autour de laquelle la courroie (41) est enroulée avec l'autre premier élément de poulie; et
un élément de pression (44) pivotant autour de l'axe de rotation avec la rotation de l'autre deuxième élément de poulie (36b) et se déplaçant vers l'extérieur dans la direction du rayon du deuxième élément de poulie tout en poussant l'autre deuxième élément de poulie vers l'autre premier élément de poulie (36a) par la force centrifuge générée par le pivot, pour ainsi diminuer la largeur de la rainure de courroie (36c) entre l'autre deuxième élément de poulie et l'autre premier élément de poulie.

10. Véhicule à selle (1) comprenant la transmission à variation continue à courroie (14) selon l'une ou l'autre revendication précédente.
